# FASCICULE DE BREVET EUROPEEN

(11) **EP 2 276 699 B1**
(45) Date de publication et mention de la délivrance du brevet: **26.09.2012**
(21) Numéro de dépôt: 09745997.8
(22) Date de dépôt: 24.04.2009
(51) Int. Cl.: C01B 33/148, B01D 37/00

(54) **NOUVEAU PROCÉDÉ DE PRÉPARATION DE SILICE PRÉCIPITÉE**
NEUARTIGES VERFAHREN ZUR HERSTELLUNG VON FÄLLUNGSKIESELSÄURE
NOVEL METHOD FOR PREPARING PRECIPITATED SILICA

(30) Priorité: 25.04.2008 FR 0852796
(43) Date de publication de la demande: 26.01.2011
(73) Titulaire: Rhodia Opérations, 93306 Aubervilliers (FR)
(72) Inventeur: SOUA, Zied, F-69100 Villeurbanne (FR); BOITELLE, Cyril, F-69100 Villeurbanne (FR)
(74) Mandataire: Blot, Philippe Robert Emile
(86) Numéro de dépôt international: PCT/FR2009/050767
(87) Numéro de publication internationale: WO 2009/138678

(56) Documents cités:
- EP-A- 0 520 862
- WO-A-02/051749
- FR-A- 1 456 256

## Description

La présente invention a pour objet un nouveau procédé de préparation de silice précipitée.

La silice précipitée est utilisée depuis longtemps comme charge blanche renforçante dans les élastomères, et en particulier dans les pneumatiques.

La préparation de silice précipitée s'effectue par précipitation de silicate, en particulier un silicate de métal alcalin, avec un agent acidifiant, suivie d'une étape de séparation par filtration pour obtenir un gâteau de filtration et d'une étape de lavage dudit gâteau, notamment dans le but d'éliminer les sels solubles formés lors de l'étape d'acidification, qui peuvent s'avérer pénalisants pour les applications du produit obtenu, puis d'une éventuelle étape de délitage du gâteau de filtration et d'une étape de séchage, par exemple par atomisation, dudit gâteau.

Pendant la filtration de la suspension de silice précipitée, l'étape de lavage correspond la plupart du temps à environ 40 % du temps du cycle global, qui comprend notamment les étapes de filtration, lavage et de compactage.

Ainsi, un des buts de la présente invention consiste à fournir un procédé permettant de réduire le temps de lavage, en conservant avantageusement la performance finale, à savoir le taux résiduel de sels solubles par rapport à la silice.

Un des buts de la présente invention consiste donc préférentiellement à augmenter la productivité du procédé de préparation de silice précipitée, notamment par rapport aux procédés de l'état de la technique, et ce, en général, d'au moins environ 5 %, en particulier d'au moins environ 20 %, par exemple jusqu'à environ 50 %.

Un autre but de la présente invention consiste à réduire la quantité d'eau utilisée lors de la préparation de silice précipitée, en particulier par rapport aux procédés de l'état de la technique.

Notamment dans ces buts, la filtration et le lavage sont regroupés en une seule opération dans le procédé selon l'invention.

Ainsi, la présente invention concerne un procédé de préparation de silice précipitée incluant une étape de filtration et de lavage d'une suspension aqueuse (S), ladite suspension (S) étant issue de la réaction d'un silicate avec un agent acidifiant, ledit procédé comprenant les étapes où :
(a) on filtre une première partie (S1) de la suspension de silice précipitée (S), ce par quoi on forme un gâteau (G1), puis on lave ledit gâteau (G1) et on forme une suspension (S'1) en mettant en suspension, notamment par dilution à l'eau, le gâteau (G1) lavé ainsi obtenu ;
(b) on filtre une deuxième partie (S2) de la suspension (S), ce par quoi on obtient un gâteau (G2) ; et
(c) on filtre ladite suspension (S'1), issue de l'étape (a), à travers le gâteau (G2) obtenu à l'issue de l'étape (b), utilisé ainsi à titre de précouche de filtration.

A l'issue de l'étape (c), un nouveau gâteau (G3) se forme sur le gâteau (G2) pour former un gâteau global (G4) qui correspond à l'association des gâteaux (G2) et (G3).

La suspension (S) de silice précipitée peut, de façon générale, être toute dispersion à base de particules de silice précipitée. Le terme "silice précipitée" désigne, au sens de la présente description, toute silice obtenue par réaction d'un silicate avec un acide, selon tout mode de préparation, notamment par addition d'un acide sur un pied de cuve de silicate, ou bien par addition simultanée, totale ou partielle, d'acide et de silicate sur un pied de cuve d'eau, ou de silicate. La suspension (S) est en général une bouillie de silice telle qu'obtenue à l'issue de telles réactions, à laquelle on peut éventuellement ajouter différents additifs.

La présente invention concerne un procédé de préparation de silice précipitée sans limitation à un type particulier de silice précipitée.

De préférence, la silice précipitée présente dans la suspension (S) est une silice de précipitation qui, une fois séchée, possède une surface spécifique BET en général comprise entre 80 et 500 m²/g, en particulier entre 100 et 350 m²/g, par exemple entre 120 et 260 m²/g, et une surface spécifique CTAB comprise entre 80 et 400 m²/g, et en particulier entre 100 et 300 m²/g, par exemple entre 100 et 240 m²/g. La surface spécifique BET est déterminée selon la méthode de BRUNAUER - EMMET - TELLER décrite dans "The journal of the American Chemical Society", Vol. 60, page 309, février 1938 et correspondant à la norme NF ISO 9277 (décembre 1996). La surface spécifique CTAB est la surface externe, qui peut être déterminée selon la méthode décrite dans la norme NF ISO 5794-1 (février 2006, 2^{ème} tirage 2006-03).

A titre de silices de précipitation particulièrement adaptées à la mise en oeuvre du procédé de l'invention, on peut notamment citer les silices de précipitation obtenues selon les procédés décrits par exemple dans les demandes EP 0 520 862, WO 95/09127, WO 95/09128, WO 98/54090 ou WO 03/016215.

L'étape (a) susmentionnée de mise en suspension du gâteau (G1) lavé correspond à une étape de repulpage dudit gâteau. (G1) est également désigné gâteau repulpé.

L'étape (b) susmentionnée consiste à former un gâteau (G2) qui par la suite est également désigné précouche.

Le procédé selon la présente invention consiste donc, en une première étape, à former une précouche de gâteau (G2), par filtration de la suspension (S2), puis à filtrer sur cette précouche une bouillie contenant avantageusement une faible teneur en sel soluble, notamment en sulfate (suspension (S'1)).

Le procédé de la présente invention comprend deux étapes principales. Au cours de la première étape, une précouche de gâteau est formée par filtration de la bouillie de silice provenant de la réaction de précipitation (suspension (S2)). Cette suspension et la précouche qui s'en suit contiennent une quantité de sel soluble, notamment de sulfate, qui varie d'un grade de silice à l'autre. Elles contiennent aussi des agglomérats (appelés aussi flocs) formés à cause des forces d'interaction entre les particules solides. Par conséquent, la résistance spécifique de la précouche est plutôt faible puisqu'elle est formée par des flocs, augmentant ainsi sa porosité.

La deuxième étape de filtration consiste à filtrer sur la précouche une bouillie obtenue par repulpage d'un gâteau de silice préalablement formé par filtration suivie d'un lavage de la suspension de silice (S1). Cette bouillie contient, par rapport à la bouillie issue de la réaction, une quantité plus importante de fines particules suite à l'action du lavage et repulpage.

Quand la bouillie "propre" (ou suspension (S'1)) entre en contact avec la précouche, un deuxième gâteau se forme. Le liquide contenu dans cette deuxième bouillie repousse progressivement le liquide contenu dans la précouche (qui contient une quantité importante de sel soluble, notamment de sulfate). Ainsi, à la fin de la filtration, il ne reste dans le gâteau que le liquide provenant de la bouillie "propre".

La concentration en sel soluble, notamment en sulfate, dans le gâteau final, après les deux étapes de filtration, n'est pas forcément égale à celle de la bouillie utilisée au cours de la deuxième étape de filtration. Le repulpage permet de libérer le sel soluble, notamment le sulfate, qui est enfermé dans les agglomérats et qu'il n'aurait pas été possible d'enlever par un lavage croisé classique.

Un essorage final par compactage permet d'évacuer une quantité supplémentaire de sel soluble, notamment de sulfate, pour obtenir un gâteau final contenant une quantité minime de sel soluble, notamment de sulfate.

Le procédé de la présente invention est également désigné comme procédé par filtration avec autoprécouche (FAP).

Comme mentionné ci-dessus, la filtration avec autoprécouche permet de réduire sensiblement le temps de lavage, ainsi que la quantité d'eau consommée.

Cette diminution du temps de lavage permet de diminuer le temps du cycle.

Ainsi, le procédé de la présente invention permet de réduire le temps du cycle total (depuis le chargement des filtres, notamment filtres-presses, jusqu'au débâtissage). Dans les procédés classiques de l'état de la technique, le temps de cycle est de l'ordre de 6000 secondes ; dans le cadre du procédé de l'invention avec filtration avec autoprécouche, le temps de cycle est, de manière avantageuse, inférieur à 6000 secondes, de préférence inférieur à 5000 secondes, voire inférieure à 3500 secondes, et, en particulier, est égal à environ 3000 secondes.

Cette diminution du temps de cycle résulte en une augmentation de la productivité.

Un gain supplémentaire peut être apporté par une augmentation de la quantité de silice par cycle. En effet, la bouillie obtenue après repulpage (suspension S'1) contient moins de flocs qu'une bouillie réactionnelle (S), donc (S'1) contient plus d'eau libre facile à évacuer par filtration. Le gâteau issu de la filtration de (S'1) est alors plus compressible, donc son épaisseur diminue par rapport à celle d'un gâteau provenant d'une bouillie réactionnelle (S). Cette différence d'épaisseur par rapport à un gâteau formé par une bouillie réactionnelle ordinaire (S) peut être utilisée pour charger plus de silice, donc plus de bouillie.

Le procédé selon la présente invention permet également d'obtenir une silice précipitée présentant un taux de sel soluble, notamment de sulfate, d'au plus 2 %, de préférence d'au plus 1,6 %, en particulier inférieur à 1 %, et par exemple inférieur à 0,3 %. Ce faible taux de sel soluble, en particulier de sulfate, favorise certaines applications, notamment dans les élastomères ou les silicones. On peut également envisager par exemple, au vu des propriétés d'absorption, des applications dans le domaine du papier ou des supports de liquides, en particulier utilisés dans l'alimentation animale (tels que les vitamines (vitamine E notamment), le chlorure de choline). On peut également prévoir des applications dans le domaine de la modification de rhéologie de milieux, par exemple comme agent épaississant pour dentifrice. Des applications comme additif anti-mottant ou viscosant ou comme élément pour séparateurs de batteries peuvent également être envisagées.

De manière avantageuse, la siccité (ou teneur en extrait sec) des gâteaux obtenus à l'issue du procédé par filtration avec autoprécouche est supérieure à 20 %, de préférence supérieure à 22 %, notamment comprise entre 23 et 30 %, par exemple comprise entre 23 et 27 %, en poids. Ainsi, il a été constaté que le gain en siccité par rapport aux procédés classiques est, en général, d'environ d'au moins 2 à 3 %, ce qui entraîne alors un gain de l'ordre d'au moins 12 % sur la quantité d'eau à évaporer par tonne de produit fini et donc un gain correspondant sur l'énergie consommée au séchage.

Le procédé selon la présente invention permet également de s'affranchir des inconvénients des procédés de l'état de la technique tels que les procédés de lavage croisé ou de lavage à l'eau par le noyau central.

Plus particulièrement, le lavage croisé présente habituellement l'inconvénient d'être long car l'eau traverse tout le gâteau en diagonale. Il est également en général consommateur d'eau. En effet, au cours du lavage, des chemins préférentiels dans le gâteau sont créés sous l'effet de la pression de lavage et donc, pour pouvoir extraire le maximum de sels, une quantité d'eau assez importante doit alors être passée.

En ce qui concerne le lavage par le noyau après l'étape de filtration, l'eau crée des chemins préférentiels (ou « by-pass ») à travers le gâteau et se dirige favorablement vers les trous qui se situent par exemple en haut à droite et en bas à gauche. Ceci a généralement pour résultat d'avoir les deux quarts du gâteau en haut à droite et en bas à gauche bien lavés et les deux quarts du gâteau en haut à gauche et en bas à droite très mal lavés.

Le procédé selon l'invention de filtration avec autoprécouche permet de résoudre le problème des chemins préférentiels. En effet, grâce à la présence des particules solides de silice dans la bouillie repulpée, les chemins préférentiels sont rapidement bouchés et l'eau est répartie d'une manière homogène sur tout le gâteau.

Selon un mode de réalisation avantageux de l'invention, le rapport massique entre la quantité de silice sèche dans le gâteau ou la précouche (G2) et la quantité de silice sèche dans le gâteau repulpé (G1) est compris entre 50/50 et 85/15.

Le procédé de la présente invention est de préférence caractérisé en outre en ce que l'étape de remise en suspension du gâteau (G1) lavé est effectuée en présence de 15 à 60 g/L de silice dans la suspension (S'1).

Selon un mode de réalisation particulier de l'invention, les étapes de filtration (b) et (c) sont effectuées sur filtre-presse.

L'utilisation de filtre(s)-presse(s) permet de faire du compactage et peut donc permettre d'éliminer par essorage une quantité supplémentaire de sels solubles, notamment de sulfates.

Selon un autre mode de réalisation particulier de l'invention, l'étape de filtration (a) est effectuée sur filtre rotatif.

Dans le cadre du procédé de la présente invention, il est possible de combiner l'utilisation de filtres-presses et de filtres rotatifs.

Dans le procédé selon l'invention, la suspension (S) contient habituellement un sel provenant de l'agent acidifiant qui a été utilisé pour précipiter la silice ; plus particulièrement, la suspension (S) contient du sulfate de sodium.

En général, ladite suspension (S) contient de 5 à 30 %, en particulier de 10 à 20 %, en poids de sel provenant de l'agent acidifiant qui a été utilisé pour précipiter la silice, et notamment de sulfate de sodium.

Selon un mode de réalisation préféré du procédé de l'invention, l'étape (c) de filtration, à l'issue de laquelle on obtient un gâteau de filtration (G4), est suivie d'une étape de séchage dudit gâteau obtenu.

Cette étape (c) peut également, le cas échéant, être suivie de toute étape de mise en forme du gâteau (G4).

Le procédé selon la présente invention permet de diminuer la consommation d'eau. De préférence, dans le cadre du procédé de l'invention, la quantité d'eau consommée, est comprise entre 5 et 10, notamment entre 6 et 8, kilogrammes d'eau par kilogramme de silice sèche.

De manière avantageuse, les toiles de filtration utilisées dans le procédé selon l'invention peuvent avoir une durée de vie plus longue que celle des toiles employées dans les procédés de l'état de la technique.

Enfin, le procédé de l'invention permet d'améliorer la productivité non seulement au niveau du filtre lui-même, mais de l'étape de filtration lavage globale dans le procédé de fabrication de silice.

### EXEMPLES

### EXEMPLE 1 : Mode laboratoire

### 1. Suspension

La suspension utilisée (S) est une bouillie de silice Z1165MP qui présente les caractéristiques suivantes :

| | |
|---|---|
| Température | 70°C |
| pH | 4,4 - 5,2 |
| Humidité | 90,0 - 90,2 % |

Au cours des manipulations, la bouillie est placée dans un bain marie afin de maintenir sa température.

### 2. Filtration

La bouillie issue de la réaction de précipitation (S) est placée dans le bac d'alimentation puis filtrée sous 4 bars, jusqu'à l'obtention de 80 mL de filtrat indiquant la formation de la précouche (G2) (moitié de la chambre remplie) et la fin de la première étape de filtration.

Au cours de la deuxième étape, la bouillie (S'1) provenant du gâteau (G1) lavé et repulpé est filtrée à la même pression de 4 bars jusqu'à la formation d'un deuxième gâteau sur la précouche. La filtration est arrêtée après l'obtention de 80 mL supplémentaires de filtrat. Le filtrat de ce gâteau, pauvre en sulfates, traverse la précouche et entraîne avec lui les sulfates qu'elle contient. Le compactage permet d'évacuer tout excès de sulfates. On obtient un gâteau final avec une quantité de sulfates inférieure à 1 % en poids.

### 3. Résultats

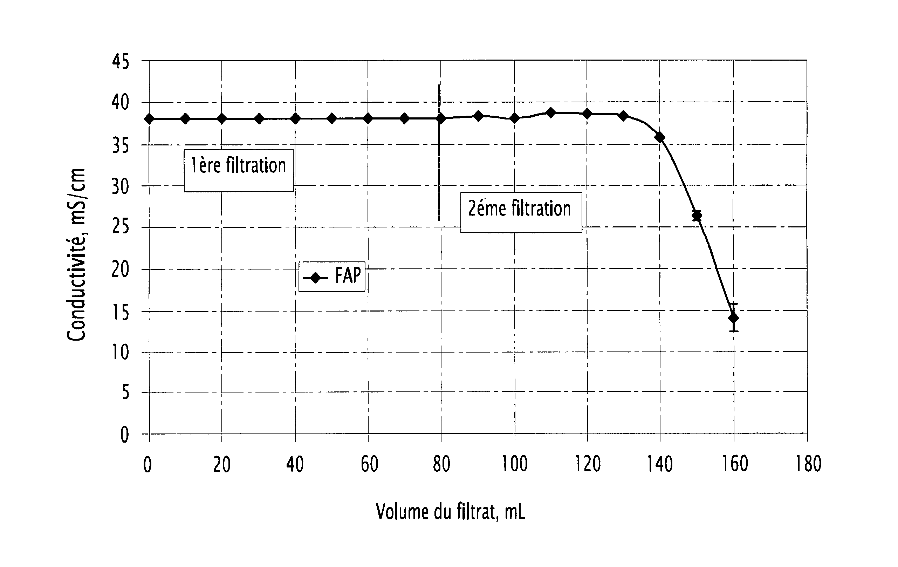

Les résultats sont indiqués sur la Figure 1, qui représente la courbe de suivi de la conductivité (mS/cm) du filtrat au cours du procédé de l'invention en fonction du volume de filtrat (mL). Les mesures ont été effectuées sur des échantillons de 10 mL de filtrat. Sur cette courbe, on distingue deux parties : une première partie, entre V = 0 mL et V = 80 mL, qui correspond à la filtration de la bouillie issue de la réaction (étape (b) du procédé) et une deuxième partie, entre V = 80 mL et V = 160 mL, qui correspond à la filtration de la bouillie contenant une très faible quantité de sulfate (étape (c) du procédé).

Sur la première partie de la courbe (première étape de filtration), la conductivité du filtrat est constante (c'est le cas d'une filtration classique). Sur la deuxième partie de la courbe (deuxième étape de filtration), deux phases sont observées.

Une première phase se situe entre V = 80 mL et V = 130 mL, où la conductivité est constante et est égale à la conductivité du liquide contenu dans la précouche. Ceci est dû au fait que le liquide provenant de la bouillie "propre" pousse celui contenant les sulfates (initialement piégés dans la précouche) par effet piston.

A la fin de la filtration, on observe une chute de conductivité indiquant l'appauvrissement de la précouche en sulfate (seconde phase, V > 130 mL). La conductivité du liquide de compactage est égale à 2 mS/cm.

Cinq essais ont été effectués et les résultats sont présentés dans le tableau ci-après :

| Ratio | Durée 1^{ère} filtration | Durée 2^{e} filtration | Durée totale filtration | % sulfates |
|---|---|---|---|---|
| 50-50 | 48 s | 200 s | 248 s | 0,6 |
| 50-50 | 45 s | 220 s | 265 s | 0,8 |
| 50-50 | 51 s | 198 s | 249 s | 0,6 |
| 50-50 | 48 s | 210 s | 258 s | 0,7 |
| 50-50 | 47 s | 200 s | 247 s | 0,6 |

Dans la première colonne de ce tableau figure le rapport en silice (solide) contenue dans la précouche (G2) / silice (solide) contenue dans le deuxième gâteau (G3). Dans cet exemple, la même quantité de silice sèche est ainsi contenue dans la précouche (G2) et dans le gâteau qui se forme dessus (G3).

Il est à noter qu'au cours de la deuxième étape de filtration on filtre une bouillie contenant plus de fines particules qu'une bouillie issue de la réaction de précipitation. Des mesures de granulométrie ont ainsi été effectuées sur une bouillie issue de la réaction et une bouillie issue d'un gâteau lavé et repulpé.

Les résultats sont présentés dans le tableau suivant :

| Diamètre | Bouillie de réaction | Bouillie repulpée |
|---|---|---|
| D (0,1), µm | 14,2 | 8,3 |
| D (0,5), µm | 95,4 | 28,7 |
| D (0,9), µm | 422,1 | 127,1 |

Il est rappelé que la valeur donnée pour D (0,1) signifie que 10% en volume des particules solides ont un diamètre inférieur à cette valeur ; de même la valeur donnée pour D (0,5) signifie que 50% en volume des particules solides ont un diamètre inférieur à cette valeur et la valeur donnée pour D (0,9) signifie que 90% en volume des particules solides ont un diamètre inférieur à cette valeur.

Dans une filtration classique, les inconvénients relatifs à la filtration d'une suspension contenant une quantité importante de fines particules résident, d'une part, dans la résistance spécifique élevée du gâteau, ce qui se traduit par une durée de filtration assez longue, et, d'autre part, dans le risque de colmatage des toiles de filtration.

Ces deux inconvénients sont fortement réduits par la présence de la précouche.

En effet, pendant la première étape de filtration, la suspension et la précouche formée contiennent des agglomérats obtenus grâce à des forces d'interaction entre les particules solides. Ces flocs protègent les toiles de filtration contre le colmatage par les fines particules de la deuxième bouillie. Ceci peut être vérifié par des mesures de turbidité.

### EXEMPLE 2

La bouillie réactionnelle (S) utilisée dans cet exemple est une bouillie réactionnelle de Z1165MP industrielle. Le slurry repulpé (S'1) est préparé à partir d'un gâteau issu de la suspension S lavée et remise en suspension à 35 g/l en SiO₂.

Le mode opératoire suivant a été utilisé :
- chargement dans le filtre de 690 litres de la bouillie réactionnelle (S) permettant la formation de la précouche (G1) ;
- chargement dans le filtre de 215 litres du slurry repulpé (S'1);
- compactage (obtention d'un gâteau G3).

Le tableau suivant caractérise le produit obtenu ainsi que les performances de ce type de filtration.

| Bouillie réactionnelle (S) | Slurry repulpé (S'1) | Durée du cycle | Siccité du gâteau (G3) | Sulfates résiduels | Taux de lavage | Productivité globale de l'étape |
|---|---|---|---|---|---|---|
| % en silice | % en silice | (S) | (%) | (%) | (kg d'eau pour 1 kg de silice) | (kg/m²/h) |
| 83 | 17 | 1350 | 23,4 | 0,6 | 5,1 | 6,2 |

La siccité est mesurée sur un gâteau après compactage. Le gâteau est placé dans une thermo-balance Sartorius à 160°C pendant 40 minutes.

On constate un gain de 56% en productivité globale de l'étape filtration lavage par rapport au procédé standard et une diminution d'eau de lavage de 64%.

## Revendications

1. Procédé de préparation de silice précipitée incluant une étape de filtration et de lavage d'une suspension aqueuse (S), comprenant les étapes dans lesquelles :
(a) on filtre une première partie (S1) de la suspension de silice précipitée (S), ce par quoi on forme un gâteau (G1), puis on lave ledit gâteau (G1) et on forme une suspension (S'1) en mettant en suspension, notamment par dilution à l'eau, le gâteau (G1) lavé ainsi obtenu ;
(b) on filtre une deuxième partie (S2) de la suspension (S), ce par quoi on obtient un gâteau (G2) ; et
(c) on filtre ladite suspension (S'1), issue de l'étape (a), à travers le gâteau (G2) obtenu à l'issue de l'étape (b), utilisé à titre de précouche de filtration.

2. Procédé de préparation selon la revendication 1, **caractérisé en ce que** le rapport massique entre la quantité de silice sèche dans la précouche (G2) et la quantité de silice sèche dans le gâteau repulpé (G1) est compris entre 50/50 et 85/15.

3. Procédé selon la revendication 1 ou 2, **caractérisé en ce que** l'étape de remise en suspension du gâteau (G1) lavé est effectuée en présence de 15 à 60 g/L de silice dans la suspension (S'1).

4. Procédé selon l'une des revendications 1 à 3, **caractérisé en ce que** les étapes de filtration (b) et (c) sont effectuées sur filtre-presse.

5. Procédé selon l'une des revendications 1 à 4, **caractérisé en ce que** l'étape de filtration (a) est effectuée sur filtre rotatif.

6. Procédé selon l'une des revendications 1 à 5, **caractérisé en ce que** la suspension (S) contient du sulfate de sodium.

7. Procédé selon la revendication 6, **caractérisé en ce que** la suspension (S) contient de 5 à 30 %, en particulier de 10 à 20 %, en poids de sulfate de sodium.

8. Procédé selon l'une des revendications 1 à 7, **caractérisé en ce que** l'étape (c) est suivie d'une étape de séchage du gâteau obtenu à l'issue de ladite étape (c).

## Claims

1. A method for preparing precipitate silica including a step for filtering and washing an aqueous suspension (S), comprising the steps wherein:
(a) a first portion (S1) of the precipitated silica suspension (S) is filtered whereby a cake (G1) is formed and said cake (G1) is then washed and a suspension (S'1) is formed by suspending the thereby obtained washed cake (G1) notably by dilution with water;
(b) a second portion (S2) of the suspension (S) is filtered whereby a cake (G2) is obtained; and
(c) said suspension (S'1) stemming from step (a) is filtered through the cake (G2) obtained at the end of step (b), used as a filtration precoating layer.

2. The preparation method according to claim 1, **characterized in that** the mass ratio between the amount of dry silica in the precoating layer (G2) and the amount of dry silica in the re-pulped cake (G1) is comprised between 50/50 and 85/15.

3. The preparation method according to claim 1 or 2, **characterized in that** the step for resuspending the washed cake (G1) is carried out in the presence of 15 to 60 g/L of silica in the suspension (S'1).

4. The method according to any of claims 1 to 3, **characterized in that** the filtration steps (b) and (c) are carried out on a filter press.

5. The method according to any of claims 1 to 4, **characterized in that** the filtration step (a) is carried out on a rotary filter.

6. The method according to any of claims 1 to 5, **characterized in that** the suspension (S) contains sodium sulfate.

7. The method according to claim 6, **characterized in that** the suspension (S) contains from 5 to 30%, in particular from 10 to 20%, by weight of sodium sulfate.

8. The method according to any of claims 1 to 7, **characterized in that** the step (c) is followed by a step for drying the cake obtained at the end of said step (c).

## Patentansprüche

1. Verfahren zur Herstellung von gefälltem Siliziumdioxid, das einen Schritt der Filtration und des Waschens einer wässrigen Suspension (S) umfasst, das Schritte umfasst bei denen:
(a) ein erster Anteil (S1) der gefällten Siliziumdioxidsuspension (S) filtriert wird, wodurch ein Kuchen (G1) gebildet wird, daraufhin der Kuchen (G1) gewaschen wird und eine Suspension (S'1) dadurch gebildet wird, dass der so erhaltene gewaschene Kuchen (G1), insbesondere durch Verdünnung mit Wasser, suspendiert wird;
(b) ein zweiter Anteil (S2) der Suspension (S) filtriert wird, wodurch ein Kuchen (G2) erhalten wird und
(c) die Suspension (S'1), die aus dem Schritt (a) hervorgeht, durch den Kuchen (G2), der aus Schritt (b) hervorgeht und der als Anschwemmfilter verwendet wird, filtriert wird.

2. Herstellungsverfahren nach Anspruch 1, **dadurch gekennzeichnet, dass** das Gewichtsverhältnis zwischen der Menge an trockenem Siliziumdioxid im Anschwemmfilter (G2) und der Menge an trockenem Siliziumdioxid im wiedergewonnenen Kuchen (G1) zwischen 50/50 und 85/15 beträgt.

3. Verfahren nach Anspruch 1 oder 2, **dadurch gekennzeichnet, dass** der Schritt des Wiedersuspendierens des gewaschenen Kuchens (G1) in Gegenwart von 15 bis 60 g/l Siliziumdioxid in der Suspension (S'1) ausgeführt wird.

4. Verfahren nach einem der Ansprüche 1 bis 3, **dadurch gekennzeichnet, dass** die Filtrationsschritte (b) und (c) mit einer Filterpresse ausgeführt werden.

5. Verfahren nach einem der Ansprüche 1 bis 4, **dadurch gekennzeichnet, dass** der Filtrationsschritt (a) mit einem Rotationsfilter ausgeführt wird.

6. Verfahren nach einem der Ansprüche 1 bis 5, **dadurch gekennzeichnet, dass** die Suspension (S) Natriumsulfat enthält.

7. Verfahren nach Anspruch 6, **dadurch gekennzeichnet, dass** die Suspension (S) 5 bis 30 Gew.%, insbesondere 10 bis 20 Gew.% Natriumsulfat enthält.

8. Verfahren nach einem der Ansprüche 1 bis 7, **dadurch gekennzeichnet, dass** dem Schritt (c) ein Schritt des Trocknens des aus diesem Schritt (c) hervorgehenden Kuchens folgt.
